# EUROPEAN PATENT APPLICATION

(11) **EP 3 819 178 A1**
(43) Date of publication of application: **12.05.2021**
(21) Application number: 19207398.9
(22) Date of filing: 06.11.2019
(51) Int. Cl.: B60W 30/14, B60W 30/16, B60W 50/10, B60W 50/14

(54) **ADAPTIVE CRUISE CONTROL SYSTEM FOR A VEHICLE AND METHOD FOR CONTROLLING A SPEED OF A VEHICLE**

(71) Applicant: Visteon Global Technologies, Inc., Van Buren Township, MI 48111 (US)
(72) Inventor: BAUDISCH, Daniel, 76356 Weingarten (DE); WEINMANN, Julia, 50827 Cologne (DE); TORSCHMIED, Axel, 75334 Straubenhardt (DE)
(74) Representative: MERH-IP Matias Erny Reichl Hoffmann Patentanwälte PartG mbB

(57) **Abstract**

An adaptive cruise control system (1) for an ego-vehicle (EV) comprises a sensor section (10) for detecting a current speed of the ego-vehicle (EV) and a distance between the ego-vehicle (EV) and a lead vehicle (LV) driving in front of the ego-vehicle (EV); an input section (20) for providing control inputs from an occupant of the ego-vehicle (EV), wherein the control inputs include at least a desired speed and a desired distance to the lead vehicle (LV); a control section (30) for controlling the speed of the ego-vehicle (EV) based on the control inputs. The control section (30) is configured to, if no lead vehicle (LV) is detected, operate in a speed control mode, in which the speed of the ego-vehicle (EV) is controlled to become equal to the desired speed; or if a lead vehicle (LV) is detected, operate in a distance control mode, in which the speed of the ego-vehicle (EV) is controlled such that the distance between the ego-vehicle (EV) and the lead vehicle (LV) becomes equal to the desired distance, with the desired speed as an upper limit of the speed of the ego-vehicle (EV). The input section (20) is configured to set as the desired distance a currently driven distance to the lead vehicle (LV) controlled by the occupant at a time when the occupant operates a set button of the input section (20); and set as the desired speed a currently driven speed controlled by the occupant at the time when the occupant operates the set button.

## Description

### TECHNICAL FIELD

One or more embodiments described herein relate to an adaptive cruise control system for a vehicle and a method for controlling a speed of a vehicle.

### BACKGROUND

A vehicle may include a conventional cruise control system (which may be referred to as "CC system"). An occupant of the vehicle, for example the driver of the vehicle, may set a constant speed for the vehicle, via the CC system. The CC system may control the vehicle such that the vehicle operates at the constant speed. In order to set the constant speed, the driver may depress a predetermined switch when the vehicle reaches a desired speed, such as through the driver's interaction with an accelerator pedal. The vehicle may be set to the constant speed when the driver depresses the switch. To change from the constant speed, the driver may interact with a brake pedal, the accelerator pedal, the switch, or another input device for adjusting speed of the vehicle.

Instead of the CC system, the vehicle may comprise an adaptive cruise control system (which may be referred to as "ACC system"). The ACC system includes a vehicle-to-vehicle distance control capability. In the ACC system, a lead vehicle is detected by a sensing device on the vehicle, such as a radar device, a camera, or the like. When there is no lead vehicle, such that there is no lead vehicle to detect by the ACC system of the vehicle, the ACC system may perform like the conventional CC system. As such, when there is no lead vehicle, the ACC system may control the vehicle such that the vehicle may operate at a constant speed. When a lead vehicle is detected, the ACC system may operate in a mode of constant vehicle-to-vehicle distance travel. In this mode, the ACC system may maintain a vehicle-to-vehicle distance between the lead vehicle and the vehicle. The distance to the lead vehicle may be expressed in terms of a time gap, i.e. as a time of flight of a measurement signal, such as from sending and receiving a radar signal from the sensing device. As such, the ACC system may set a constant time gap to maintain the vehicle-to-vehicle distance.

The ACC system generally allows an occupant, for example the driver, to set two function variables, namely speed for the vehicle and distance to the lead vehicle. In order for the driver to set and/or change these function variables (and in order to therefore operate the ACC system), the ACC system includes switches on an indicator stalk and/or buttons on a steering wheel and/or additional input devices. Each input device may control a particular aspect of the ACC system. For example, there may be a first input device for turning on the ACC system, there may be a second input device for turning off the ACC system, there may be a third input device for setting the speed variable, there may be a fourth input device for adjusting the speed variable, there may be a fifth input device for setting the distance variable, and there may be a sixth input device for adjusting the distance variable. Additionally, there may be multiple input devices for controlling the same functionality-such as turning off or adjusting the ACC system.

The numerous combination of switches, buttons, and/or additional input devices results in a complex layout. Because of that complexity, the driver may have to spend ample time learning and familiarizing himself/herself to the complex layout. The complex layout may be unique to a particular vehicle, line of vehicles, or trim of vehicles. As such, when the driver enters another vehicle that includes an ACC system, the driver may have to spend ample time learning and familiarizing himself/herself to another complex layout of switches, buttons, and/or additional input devices. This may result in a frustrating experience for the driver, which may result in refusal/underutilization of ACC systems and impair user experience. The complex layout may further impact the design of components and systems outside of the ACC system, such as the steering wheel. The complex layout may increase cost of components and systems outside of the ACC system.

In the present description, the term speed is used to refer to an absolute value of a velocity of a vehicle driving on a road. Thus, the speed represents a rate of change of the vehicle's position with respect to a frame of reference (i.e. the road) as a function of time. Conventionally the speed of a vehicle is measured in kilometers per hour (kph) or miles per hour (mph) or in meters per second (ms⁻¹).

### BRIEF SUMMARY OF THE INVENTION

Aspects of the present application are directed at an adaptive cruise control (ACC) system for an ego-vehicle driving on a road.

According to an aspect, the system comprises a sensor section for detecting a current speed of the ego-vehicle and a distance between the ego-vehicle and a lead vehicle driving in front of the ego-vehicle. The sensor section comprise at least one sensor for detecting the current speed of the ego-vehicle and at least one sensor for detecting the distance to the lead vehicle. The sensor for detecting the distance may use electromagnetic radiation for detecting the distance such as a radar sensor and/or an optical sensor. The optical sensor may be at least one of a laser sensor and/or a camera.

According to an aspect, the system comprises an input section for providing control inputs from an occupant of the ego-vehicle, for example the driver of the ego-vehicle, wherein the control inputs include at least a desired speed and a desired distance to the lead vehicle. The input section includes at least a gas pedal, a brake pedal, and at least one set button for activating the ACC system. The set button may be a toggle switch for activating and deactivating the ACC system and/or for switching between operating modes of the ACC system. Furthermore, the input section may comprise at least one stalk switch and/or steering wheel buttons or switches for providing one or more of the following functions: increase set speed by minor increments, e.g. +1 km/h, decrease set speed by minor increments, e.g. -1 km/h, increase set speed by major increments, e.g. +10 km/h, decrease set speed by major increments, e.g. -10km/h. Furthermore, the input section may comprise an indicator stalk switch. Moreover, the input section may comprise the steering wheel.

According to an aspect, the system comprises a control section for controlling the speed of the ego-vehicle based on the control inputs. The control section may be configured as one or more electronic control units (ECUs) of the vehicle comprising at least one central processing unit (CPU). In particular, the control section may be part of an advanced driving assistance system (ADAS). According to an aspect, the control section receives the control inputs from the input section and the detected speed and distance from the measurement section as input parameters.

According to an aspect, the control section is configured to, if no lead vehicle is detected, operate in a speed control mode, in which the speed of the ego-vehicle is controlled to become equal to the desired speed.

According to an aspect, the control section is configured to, if a lead vehicle is detected, operate in a distance control mode, in which the speed of the ego-vehicle is controlled such that the distance between the ego-vehicle and the lead vehicle becomes equal to the desired distance, with the desired speed as an upper limit of the speed of the ego-vehicle.

According to an aspect, the input section is configured to set as the desired distance a currently driven distance to the lead vehicle controlled by the occupant at a time when the occupant operates a set button of the input section. Thus, the occupant may control the distance to the lead vehicle manually by driving to a desired distance behind the lead vehicle and set the desired distance for the ACC by simply operating a single set button.

According to an aspect, the input section is configured to set as the desired speed a currently driven speed controlled by the occupant at the time when the occupant operates the set button. Thus, at the same time as setting the desired distance, the desired speed is set when the occupant operates the set button.

According to an aspect, the ACC system further comprises an output section for providing visual and/or audible information to the occupant comprising information on at least one of a current driving mode, a currently set desired distance, a currently set desired speed, a last desired speed, and/or a last desired distance. The output section may comprise at least one display unit for displaying the visual information.

According to an aspect, the input section is configured to after the desired speed and the desired distance have been set, set as a new desired distance the currently driven distance to the lead vehicle controlled by the occupant by accelerating or decelerating the vehicle to a new distance when the occupant performs a predefined input operation, wherein the previously set desired speed is not changed.

Thus, when the ACC system has been activated and the occupant wishes to change the desired distance to the lead vehicle, the occupant can manually override the speed control by the ACC system and change the distance by simply accelerating or decelerating the vehicle and reengage the ACC system with the new distance by performing the predefined input operation. The predefined input operation may be pressing the set button which engages the ACC system. The previously set desired speed may not be affected by the operation of adjusting the desired distance.

In some embodiments, the ACC system may disengage when the occupant decelerates by using the brake pedal. In such a case, the ACC system may switch into a standby mode, such that engaging the set button will set the current distance and the current speed as the new desired distance and new desired speed, respectively. According to another aspect, only the new desired distance may be set after decelerating by braking the ego-vehicle by the previously set desired speed may be restored.

On the other hand, in some embodiments, the ACC system may go into a passive mode when the occupant accelerates the vehicle using the gas pedal. When releasing the gas pedal again, the ACC system may go back into an active mode with the previously set desired distance and desired speed. In such a case, after manually changing the distance to the lead vehicle by accelerating the ego-vehicle, the occupant may use the set button to set the current distance to the lead vehicle as a new desired distance without changing the previously set desired speed.

According to an aspect, the input section is configured to set a predefined minimum distance as the desired distance when the currently driven distance to the lead vehicle controlled by the occupant is smaller than the predefined minimum distance when the occupant operates the set button. The predefined minimum distance may be defined as a minimum distance assumed to be necessary for performing an emergency stop without endangering the passengers of the ego-vehicle. The predefined minimum distance may also be defined according to traffic laws. In general, the predefined minimum distance may be dependent on the currently driven speed of the ego-vehicle. Furthermore, the predefined minimum distance may be dependent on at least one of the current weather situation, the current ambient temperature, the current tire temperature, and/or the current road temperature.

According to an aspect, the input section is configured to, if no lead vehicle is detected, set as the desired distance a last set distance or a predefined default distance, wherein the predefined default distance is set based on a driving performance mode including a sport mode, a comfort mode, and an economic mode. For example, the predefined default distance in sport mode may be smaller than the predefined default distance in comfort mode and/or eco mode. According to an aspect, the occupant may be able to manually preset the values for the predefined default distances.

According to an aspect, the distance to the lead vehicle is measured as a time gap.

According to an aspect, a vehicle comprises an adaptive cruise control system according to aspects described herein.

According to an aspect, a method for controlling a speed of an ego-vehicle driving on a road, comprises a step of detecting a current speed of the ego-vehicle and a distance between the ego-vehicle and a lead vehicle driving in front of the ego-vehicle.

According to an aspect, the method comprises a step of providing control inputs from a occupant of the ego-vehicle, wherein the control inputs include at least a desired speed and a desired distance to the lead vehicle.

According to an aspect, the method comprises a step of controlling the speed of the ego-vehicle based on the control inputs.

According to an aspect, if no lead vehicle is detected, the method operates in a speed control mode, in which the speed of the ego-vehicle is controlled to become equal to the desired speed.

According to an aspect, if a lead vehicle is detected, the method operates in a distance control mode, in which the speed of the ego-vehicle is controlled such that the distance between the ego-vehicle and the lead vehicle becomes equal to the desired distance, with the desired speed as an upper limit of the speed of the ego-vehicle.

According to an aspect, the method comprises a step of setting as the desired distance a currently driven distance to the lead vehicle controlled by the occupant at a time when the occupant operates a set button.

According to an aspect, the method comprises a step of setting as the desired speed a currently driven speed controlled by the occupant at the time when the occupant operates the set button.

According to an aspect, the method comprises a step of providing visual and/or audible information to the occupant comprising information on at least one of a current driving mode, a currently set desired distance, a currently set desired speed, a last desired speed, and/or a last desired distance.

According to an aspect, the method comprises, after the desired speed and the desired distance have been set, a step of setting as a new desired distance the currently driven distance to the lead vehicle controlled by the occupant by accelerating or decelerating the vehicle to a new distance when the occupant performs a predefined input operation, wherein the previously set desired speed is not changed.

According to an aspect, the method comprises a step of setting a predefined minimum distance as the desired distance when the currently driven distance to the lead vehicle controlled by the occupant is smaller than the predefined minimum distance when the occupant operates the set button.

According to an aspect, the method comprises, if no lead vehicle is detected, a step of setting as the desired distance a last set distance or a predefined default distance, wherein the predefined default distance is set based on a driving performance mode including a sport mode, a comfort mode, and an economic mode.

According to an aspect, the method comprises a step of outputting at least two different proposed distances to the occupant and a step of setting the desired distance selected by the occupant.

According to an aspect, the method described herein is performed by an ACC system described herein.

According to aspects described herein, it is possible to replace conventional methods of defining a distance to a lead vehicle while driving using an ACC system. Instead of offering the occupant fixed predefined distances (for example short distance, intermediate distance, and large distance), the occupant can choose a distance to the lead vehicle freely by manually driving to the desired distance behind the lead vehicle. Within a permitted distance range the ACC system may set a currently driven distance controlled by the occupant as a set value. Thus, an intuitive control of the distance to the lead vehicle can be implemented.

### BRIEF DESCRIPTION OF THE DRAWINGS

Fig. 1 illustrates an adaptive cruise control system according to an aspect.
Fig. 2 illustrates a method for controlling a speed of an ego-vehicle according to an aspect.
Fig. 3 illustrates an exemplary application of an adaptive cruise control system according to an aspect.

### DETAILED DESCRIPTION OF THE INVENTION

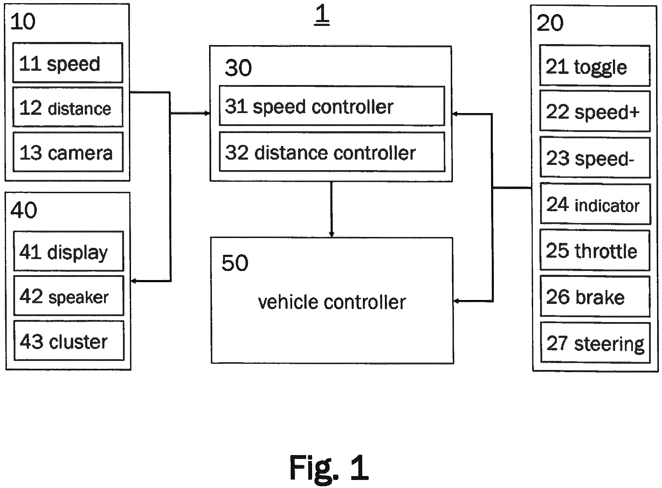

Fig. 1 illustrates an exemplary embodiment of an adaptive cruise control (ACC) system 1 for an ego-vehicle EV according to an aspect. The ACC system 1 comprises a sensor section 10, an input section 20, a control section 30, an output section 40, and a vehicle control section 50.

The sensor section comprises a speed sensor 11, a distance sensor 12, and a camera 13. The speed sensor 11 is configured for detecting the current speed of the ego-vehicle EV. The distance sensor 12 is configured for detecting a distance between the ego-vehicle EV and a lead vehicle LV driving in front of the ego-vehicle EV. The distance sensor 12 may comprise at least one of a radar sensor and/or an optical sensor such as a laser or a LiDAR sensor. The camera 13 may consist of or more cameras which may be used for capturing images of the environment of the ego-vehicle EV, for example, one or more front facing perspective cameras and/or one or more side-facing fisheye cameras. In particular, the camera 13 captures images of the road R the ego-vehicle is driving on. The images provided by the camera 13 may be used to detect a lead vehicle LV driving in front of the ego-vehicle EV and to measure a distance to the lead vehicle LV.

The input section 20 is configured for providing control inputs from an occupant of the ego-vehicle EV, for example a driver of the ego-vehicle EV, wherein the control inputs include at least a desired speed and a desired distance to the lead vehicle LV. The input section 20 comprises a toggle switch or set button 21 for engaging and/or disengaging the ACC system 1. This toggle switch or set button 21 may combine the functions of setting the desired speed, setting the distance to the lead vehicle LV, enabling the ACC system 1 (toggle ON), disabling the ACC system 1 (toggle OFF), setting the ACC system 1 in a passive mode, and/or resuming with a previously set desired speed. The input section 20 further comprises a button or switch 22 for increasing the set speed and a button or switch 23 for decreasing the set speed. The increasing and decreasing the set speed may be performed with minor increments, e.g. ±1 km/h or major increments, e.g. ±10 km/h. The input section 20 further comprises an indicator stalk switch 24 for activating the left or right turn signals.

When the driver activates the turn signals left or right, the distance sensor 12 and/or the camera 13 may detect whether or not another vehicle is driving on a lane left or right of the lane the ego-vehicle EV is currently driving on. In dependence of a detected presence or absence of another vehicle, the control section 30 may determine that the driver intends to change lanes and control the speed of the ego-vehicle EV to increase or decrease accordingly, such that either the desired distance is maintained or the desired speed is reached shortly after changing lanes.

The input section 20 further comprises a sensor 25 detecting the state of the throttle or the gas pedal, a sensor 26 detecting an operation of the brake pedal, and a sensor 27 detecting a steering angle of the steering wheel of the ego-vehicle.

The control section 30 is configured for controlling the speed of the ego-vehicle EV based on the control inputs provided by the input section 20. The control section 30 may generate output signals which are provided to the vehicle control section 50 in order to control the speed of the ego-vehicle EV, for example by controlling the throttle and the brakes of the ego-vehicle EV, thus accelerating and/or decelerating the ego-vehicle EV.

The output section 40 is configured for providing visual and/or audible information to the driver comprising information on at least one of a current driving mode, a currently set desired distance, a currently set desired speed, a last desired speed, and/or a last desired distance. For this purpose the output sections 40 comprises at least one display screen 41. Furthermore, the output sections 40 may comprise at least one speaker 42, and/or an instrument cluster 43.

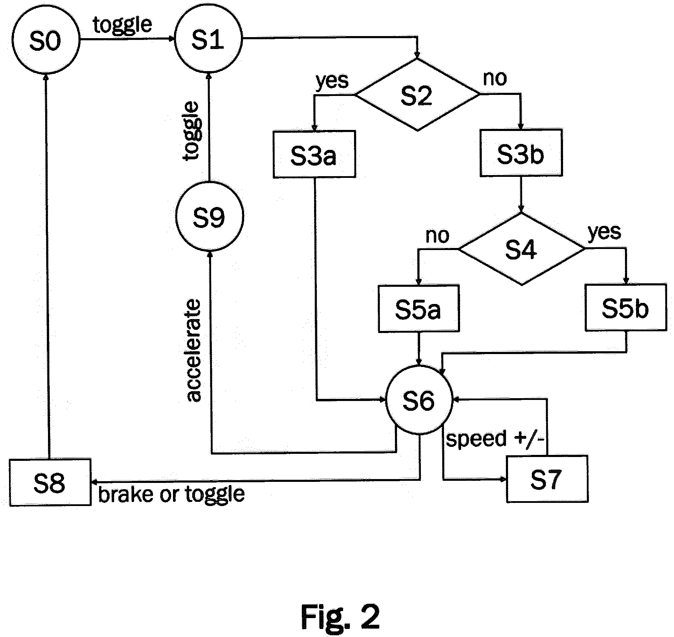

Fig. 2 illustrates an exemplary method according to an aspect for controlling a speed of an ego-vehicle EV according to an aspect. In particular, the method is applied in an ACC system 1 according to an aspect.

In an initial state S0, the ACC system 1 is inactive. At some point in time, the driver of the ego-vehicle EV actives the ACC system 1 in step S1 by pressing a set button 21.

In S2, a determination is made whether or not the detection section 10 detects a lead vehicle LV driving on the road R in front of the ego-vehicle EV. If the outcome of the determination is yes, i.e. if there is a lead vehicle LV present within the detection range of the detection section 10, the method proceeds to step S3a, if the outcome of the determination is no, i.e. if there is no lead vehicle LV present within the detection range of the detection section 10, the method proceeds to step S3b.

In step S3a, the ACC system 1 goes into the distance control mode in which the speed of the ego-vehicle EV is controlled such that the distance between the ego-vehicle EV and the lead vehicle LV becomes equal to the desired distance, with the desired speed as an upper limit of the speed of the ego-vehicle EV. As the desired distance, the currently driven distance is set, given that this distance is within an allowed range. If the currently driven distance is smaller than the minimum allowed distance, this minimum allowed distance is set as the desired distance.

In step S3b, the ACC system 1 goes into the speed control mode, in which the speed of the ego-vehicle EV is controlled to become equal to the desired speed. In other words, when no lead vehicle LV is present within the sensing range of the detection section 10, the ACC system 1 may operate like a conventional cruise control system. As the desired speed, the currently driven speed may be set.

Next, in step S4, a determination may be made whether or not the ACC system 1 has been activated for the first time, wherein the "first time" may relate, for example, to the first operation since the engine of the ego-vehicle EV has been started or the first time since the ACC system 1 has been reset, for example by pressing a reset button. If the outcome of the determination in S4 is negative (no in Fig. 2), the method proceeds to step S5a. If the outcome of the determination in S4 is positive (yes in Fig. 2), the method proceeds to step S5a.

In step S5a, the desired distance set in the last operation of the ACC system 1 may be restored. In step S5, a preset value for the desired distance may be set, for example the maximally allowed distance or the smallest allowed distance. Alternatively, the desired distance may be set to a preset value according to a currently used driving mode including, for example, a sport mode, a comfort mode, and an economic mode.

Alternatively, when the ACC system 1 is activated without a lead vehicle within the detection range of the detection section 10, a default setting for the desired distance may be set. As a default setting one of the following distances may be set: the maximum sensor range of the detection section 10, a legally recommended distance, or the smallest legally allowed distance. The legally recommended or minimal required distances may depend on the current speed of the ego-vehicle EV.

In step S6, the ego-vehicle EV will continue to drive in constant speed mode or constant distance mode until either the driver performs an input operation which alters the state of the ACC system 1, for example by pressing the set button 21 again and thereby toggling off the ACC system 1 or by using the brake pedal 26. In such a case, the method will proceed to step S8 in which the currently set desired distance is stored as the last set value. Subsequently, the ACC system 1 goes back into the inactive state of S0.

Moreover, while in state S6 and driving in the constant speed mode, a lead vehicle LV may appear in front of the ego-vehicle EV. In this case, the ACC system 1 may switch into constant distance mode and operate according to the set desired distance.

While in S6, the driver may operate switches 22 or 23 to increase or decrease the set desired speed. In step S7, the desired speed is updated and the method returns to state S6.

While in S6, the driver may wish to adjust the desired distance or the desired speed manually by accelerating the ego-vehicle EV using the throttle 25. While depressing the gas pedal, the ACC system 1 may go into a passive state S9 in which the distance and speed control functions may be inactive as long as the driver opens the throttle 25 manually. When at the new distance and/or new speed, the driver may press the set button 21 again, and thus the method returns to state S1.

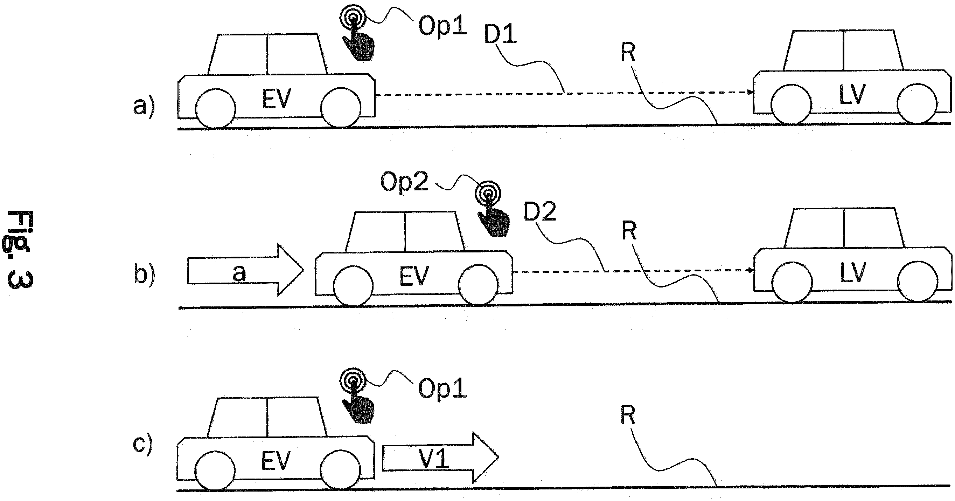

Fig. 3 illustrates an exemplary application of an adaptive cruise control ACC system 1 according to an aspect. In Fig. 3a), an ego-vehicle EV is driving on a road R behind a lead vehicle LV at a speed V1. The distance between the ego-vehicle EV and the lead vehicle LV is D1. When the driver of the ego-vehicle EV performs an operation Op1 of pressing a set button of the ACC system 1, the current distance D1 and the current speed V1 are set as the desired distance and the desired speed, respectively. Then the ACC system 1 will operate in a distance control mode and control the speed of the ego-vehicle EV to maintain the desired distance D1 with the desired speed as an upper limit of the speed of the ego-vehicle EV.

Thus, when engaging the ACC system 1, the current distance D1 will be set as the desired distance and the ACC system 1 will control the speed of the ego-vehicle EV in order to maintain this distance.

If the driver of the ego-vehicle EV wants to reduce the desired distance to the lead vehicle LV, the driver may perform a manual override and accelerate to a new, shorter distance D2 behind the lead vehicle LV. The acceleration is indicated in Fig. 3b) by the arrow marked a. By performing an input operation Op2, for example by pressing the set button of the ACC system 1 again, the driver may reengage the ACC system 1 to operate in the distance control mode and control the speed of the ego-vehicle EV to maintain the new, smaller desired distance D2 with the previously set desired speed as an upper limit of the speed of the ego-vehicle EV.

Thus, a very simple an intuitive way of adjusting the desired distance to the lead vehicle can be implemented which only requires the driver to operate a single set button which may be the same button which engages (or toggles) the ACC system 1.

Fig. 3c) illustrates a case in which no lead vehicle LV is in range. In this case the ACC system 1 may operate in a speed control mode and control the speed of the ego-vehicle EV to be equal to the desired speed V1. This operation may be performed until a lead vehicle LV comes into sensor range. Then a default setting for the desired distance, for example the maximum distance, may be applied. As described above, this distance may be adjusted by the driver by accelerating the ego-vehicle EV and pressing the set button of the ACC system 1.

Moreover, the default setting may be adjusted by the driver according to personal preferences, for example a maximal distance, a legally required distance, a legal recommended distance, etc.

In order to allow for a large distance between the ego-vehicle EV and a lead vehicle, i.e. in a case that the driver wishes to set a largest possible distance, the ACC system 1 may control the distance, such that a lead vehicle may be kept just outside of the sensor range. If this distance becomes too large to control, an override to make the distance smaller may be implemented.

The features described in herein can be relevant to one or more embodiments in any combination. The reference numerals in the claims have merely been introduced to facilitate reading of the claims. They are by no means meant to be limiting.

Throughout this specification various embodiments have been discussed. However, it should be understood that the invention is not limited to any one of these. It is therefore intended that the foregoing detailed description be regarded as illustrative rather than limiting.

## Claims

1. An adaptive cruise control system (1) for an ego-vehicle (EV), the system comprising:
a sensor section (10) for detecting a current speed of the ego-vehicle (EV) and a distance between the ego-vehicle (EV) and a lead vehicle (LV) driving in front of the ego-vehicle (EV);
an input section (20) for providing control inputs from an occupant of the ego-vehicle (EV), wherein the control inputs include at least a desired speed and a desired distance to the lead vehicle (LV);
a control section (30) for controlling the speed of the ego-vehicle (EV) based on the control inputs, wherein the control section (30) is configured to:
if no lead vehicle (LV) is detected, operate in a speed control mode, in which the speed of the ego-vehicle (EV) is controlled to become equal to the desired speed; or
if a lead vehicle (LV) is detected, operate in a distance control mode, in which the speed of the ego-vehicle (EV) is controlled such that the distance between the ego-vehicle (EV) and the lead vehicle (LV) becomes equal to the desired distance, with the desired speed as an upper limit of the speed of the ego-vehicle (EV),
**characterized in that** the input section (20) is configured to:
set as the desired distance a currently driven distance to the lead vehicle (LV) controlled by the occupant at a time when the occupant operates a set button of the input section (20); and
set as the desired speed a currently driven speed controlled by the occupant at the time when the occupant operates the set button.

2. The adaptive cruise control system (1) according to claim 1, further comprising:
an output section (40) for providing visual and/or audible information to the occupant comprising information on at least one of a current driving mode, a currently set desired distance, a currently set desired speed, a last desired speed, and/or a last desired distance.

3. The adaptive cruise control system (1) according to claim 1 or 2, wherein the sensor section (10) comprises:
a speed sensor (11) for detecting the current speed of the ego-vehicle (EV); and
at least one of a radar sensor and/or an optical sensor for detecting the distance between the ego-vehicle (EV) and a lead vehicle (LV) driving in front of the ego-vehicle (EV).

4. The adaptive cruise control system (1) according to at least one of the previous claims, wherein the input section (20) is configured to:
after the desired speed and the desired distance have been set, set as a new desired distance the currently driven distance to the lead vehicle (LV) controlled by the occupant by accelerating or decelerating the vehicle to a new distance when the occupant performs a predefined input operation, wherein the previously set desired speed is not changed.

5. The adaptive cruise control system (1) according to at least one of the previous claims, wherein the input section (20) is configured to set a predefined minimum distance as the desired distance when the currently driven distance to the lead vehicle (LV) controlled by the occupant is smaller than the predefined minimum distance when the occupant operates the set button (21).

6. The adaptive cruise control system (1) according to at least one of the previous claims, wherein the input section (20) is configured to, if no lead vehicle (LV) is detected, set as the desired distance a maximum detection range of the sensor section (10), or a last set distance, or a predefined default distance, wherein the predefined default distance is set based on a driving performance mode including a sport mode, a comfort mode, and an economic mode, or based on a preference of an occupant of the ego-vehicle (EV).

7. The adaptive cruise control system (1) according to at least one of the previous claims, wherein the distance to the lead vehicle (LV) is measured as a time gap.

8. Vehicle (EV) comprising an adaptive cruise control system (1) according to at least one of the previous claims.

9. Method for controlling a speed of an ego-vehicle (EV) driving on a road (R), the method comprising:
detecting a current speed of the ego-vehicle (EV) and a distance between the ego-vehicle (EV) and a lead vehicle (LV) driving in front of the ego-vehicle (EV);
providing control inputs from an occupant of the ego-vehicle (EV), wherein the control inputs include at least a desired speed and a desired distance to the lead vehicle (LV);
controlling the speed of the ego-vehicle (EV) based on the control inputs, wherein:
if no lead vehicle (LV) is detected, operating in a speed control mode, in which the speed of the ego-vehicle (EV) is controlled to become equal to the desired speed; or
if a lead vehicle (LV) is detected, operating in a distance control mode, in which the speed of the ego-vehicle (EV) is controlled such that the distance between the ego-vehicle (EV) and the lead vehicle (LV) becomes equal to the desired distance, with the desired speed as an upper limit of the speed of the ego-vehicle (EV),
**characterized by**:
setting as the desired distance a currently driven distance to the lead vehicle (LV) controlled by the occupant at a time when the occupant operates a set button; and
setting as the desired speed a currently driven speed controlled by the occupant at the time when the occupant operates the set button.

10. The method according to claim 9, further comprising:
providing visual and/or audible information to the occupant comprising information on at least one of a current driving mode, a currently set desired distance, a currently set desired speed, a last desired speed, and/or a last desired distance.

11. The method according to claim 9 or 10, further comprising:
after the desired speed and the desired distance have been set, setting as a new desired distance the currently driven distance to the lead vehicle (LV) controlled by the occupant by accelerating or decelerating the vehicle to a new distance when the occupant performs a predefined input operation, wherein the previously set desired speed is not changed.

12. The method according to at least one claims 9 to 11, further comprising:
setting a predefined minimum distance as the desired distance when the currently driven distance to the lead vehicle (LV) controlled by the occupant is smaller than the predefined minimum distance when the occupant operates the set button (21).

13. The method according to at least one of claims 9 to 12, further comprising if no lead vehicle (LV) is detected, setting as the desired distance a last set distance or a predefined default distance, wherein the predefined default distance is set based on a driving performance mode including a sport mode, a comfort mode, and an eco mode.

14. The method according to at least one of claims 9 to 13, wherein the distance is measured as a time gap.

15. The method according to at least one of claims 9 to 14, further comprising:
outputting at least two different proposed distances to the occupant; and
setting the desired distance selected by the occupant.
